# EUROPEAN PATENT SPECIFICATION

(11) **EP 2 966 379 B1**
(45) Date of publication and mention of the grant of the patent: **16.05.2018**
(21) Application number: 13877115.9
(22) Date of filing: 04.03.2013
(51) Int. Cl.: F25B 1/00, F25B 6/02, F25B 13/00, F25B 41/06, F25B 45/00

(54) **AIR CONDITIONER**
KLIMAANLAGE
DISPOSITIF DE CONDITIONNEMENT D'AIR

(43) Date of publication of application: 13.01.2016
(73) Proprietor: Mitsubishi Electric Corporation, Tokyo 100-8310 (JP)
(72) Inventor: AZUMA, Koji, Tokyo 100-8310 (JP); NAKAO, Hiroto, Tokyo 102-0073 (JP); HONDA, Toshihiko, Tokyo 100-8310 (JP); SHIRAMIZU, Akiyoshi, Tokyo 102-0073 (JP); HAYASHIDA, Katsuhiko, Tokyo 102-0073 (JP); MORIMOTO, Osamu, Tokyo 100-8310 (JP)
(74) Representative: Pfenning, Meinig & Partner mbB
(86) International application number: PCT/JP2013/055864
(87) International publication number: WO 2014/136187

(56) References cited:
- WO-A1-2011/135616
- WO-A1-2012/081110
- WO-A1-2012/081110
- JP-A- H0 526 526
- JP-A- 2008 224 190
- JP-A- 2008 249 236
- JP-A- 2009 300 041
- JP-A- 2009 300 041
- US-A1- 2009 320 506
- US-A1- 2011 036 119

## Description

### Technical Field

The present invention relates to an air-conditioning apparatus.

### Background Art

There is a conventional air-conditioning apparatus in which, for example, a compressor, a four-way valve, an outdoor side heat exchanger, an expansion device, and an indoor side heat exchanger are sequentially connected to perform heating operation and cooling operation by switching the four-way valve. In addition, there is a conventional air-conditioning apparatus, such as a multi-air-conditioning apparatus for a building in which a plurality of indoor units each provided with an indoor side heat exchanger are connected to an outdoor unit provided with an outdoor side heat exchanger.

There is a kind of such an air-conditioning apparatus in which an accumulator is provided to a suction side of a compressor, and a bypass pipe branching off from pipes provided between an outdoor side heat exchanger and an expansion device is connected to an upstream side of the accumulator so that a subcooling heat exchanger provided at a position between the outdoor side heat exchanger and the branch point exchanges heat between refrigerant flowing between the outdoor side heat exchanger and the branch point, and refrigerant having reduced pressure flowing through the bypass pipe (refer to Patent Literature 1, for example).

### Citation List

### Patent Literature

**Patent Literature 1: Japanese Unexamined Patent Application Publication No.** 2010-164219 **(paragraphs [0012] to [0054] and** **Figs. 1 and 2****)**

### Summary of Invention

The document US 2009/320506 A1 discloses an air-conditioning apparatus comprising a compressor, an outdoor side heat exchanger, a subcooling heat exchanger, an expansion device including a flow rate adjustable three-way valve, and an indoor side heat exchanger, being sequentially connected by pipes. This air-conditioning apparatus is also provided with a bypass line, allowing to lead the refrigerant through a main expansion device or a fixed restriction expansion device. A valve enables or blocks refrigerant flow through this bypass line depending on the volume of refrigerant required to circulate through the refrigerant system, such that the bypass line may for instance be activated when high refrigerant flow is required.

WO 2012 081110 A1 presents an air-conditioning apparatus capable to switch between a forced circulation cycle using a compressor and a natural circulation cycle in which the refrigerant is circulated without a compressor by means of density difference using a bypass pipe and an auxiliary outside heat exchanger.

### Technical Problem

In this kind of air-conditioning apparatus, when heating operation and cooling operation are switched, an amount of a circulating refrigerant is not controlled. As a result, for example, when heating operation is performed in a state where an accumulator has a high liquid level, much liquid refrigerant may flow into the accumulator to cause overflow. The same applies to defrosting operation to be performed during heating operation. If such a state is repeated, for example, liquid refrigerant is sucked into the compressor to cause deterioration of reliability of the air-conditioning apparatus, such as breakage of the compressor.

When an accumulator has a sufficient capacity, an overflow does not occur; however, as capacity of the accumulator increases, an air-conditioning apparatus increases in size to cause high cost. Particularly, when a plurality of indoor units are connected to outdoor units, an accumulator of every outdoor unit must have a sufficient capacity to prevent an overflow in the every outdoor unit. As a result, the air-conditioning apparatus increases more in size to increase cost more.

The present invention has been made to solve the problem described above, and an object is to provide an air-conditioning apparatus capable of adjusting an amount of liquid refrigerant of an accumulator.

### Solution to Problem

An air-conditioning apparatus in accordance with the present invention includes a compressor, an outdoor side heat exchanger, a subcooling heat exchanger, an expansion device, an indoor side heat exchanger, and an accumulator, being sequentially connected by pipes. The expansion device includes a flow rate adjustable three-way valve. The flow rate adjustable three-way valve includes an opening connected to a pipe communicating with the outdoor side heat exchanger, an opening connected to a pipe communicating with the indoor side heat exchanger, and an opening connected to a pipe communicating with an upstream side of the accumulator through the subcooling heat exchanger. The subcooling heat exchanger is configured to exchange heat between refrigerant flowing through the pipe communicating with the outdoor side heat exchanger and refrigerant flowing through the pipe communicating with the upstream side of the accumulator. Valves are respectively provided to the pipe communicating with the outdoor side heat exchanger at a position between the flow rate adjustable three-way valve and the subcooling heat exchanger, and to the pipe communicating with the upstream side of the accumulator at a position between the flow rate adjustable three-way valve and the subcooling heat exchanger.

### Advantageous Effects of Invention

In the air-conditioning apparatus in accordance with the present invention, the expansion device includes the flow rate adjustable three-way valve, including the opening connected to the pipe communicating with the outdoor side heat exchanger, the opening connected to the pipe communicating with the indoor side heat exchanger, and the opening connected to the pipe communicating with the upstream side of the accumulator through the subcooling heat exchanger, and there is provided the valve in each of the pipe communicating with the outdoor side heat exchanger, arranged at a position between the flow rate adjustable three-way valve and the subcooling heat exchanger, and the pipe communicating with the upstream side of the accumulator, arranged at a position between the flow rate adjustable three-way valve and the subcooling heat exchanger. As a result, an amount of liquid refrigerant of the accumulator can be adjusted to prevent an overflow of the accumulator to improve reliability of the air-conditioning apparatus.

### Brief Description of Drawings

[Fig. 1] Fig. 1 shows a structure of an air-conditioning apparatus in accordance with Embodiment 1 of the present invention.
[Fig. 2] Fig. 2 shows a structure of a flow rate adjustable three-way valve of the air-conditioning apparatus in accordance with Embodiment 1 of the present invention.
[Fig. 3] Fig. 3 shows opening and closing states of the flow rate adjustable three-way valve of the air-conditioning apparatus in accordance with Embodiment 1 of the present invention.
[Fig. 4] Fig. 4 shows a structure of the flow rate adjustable three-way valve of the air-conditioning apparatus in accordance with Embodiment 1 of the present invention.
[Fig. 5] Fig. 5 shows a relationship between opening and closing states of the flow rate adjustable three-way valve and a bypass flow control solenoid valve, of the air-conditioning apparatus in accordance with Embodiment 1 of the present invention.
[Fig. 6] Fig. 6 shows a control flow of the air-conditioning apparatus in accordance with Embodiment 1 of the present invention during finishing cooling operation.
[Fig. 7] Fig. 7 shows a relationship between liquid level height in an accumulator and an ACC rank, of the air-conditioning apparatus in accordance with Embodiment 1 of the present invention.
[Fig. 8] Fig. 8 shows a flow of refrigerant when a capacity control solenoid valve of the air-conditioning apparatus in accordance with Embodiment 1 of the present invention is closed.
[Fig. 9] Fig. 9 shows a control flow of the air-conditioning apparatus in accordance with Embodiment 1 of the present invention during finishing defrosting operation.
[Fig. 10] Fig. 10 shows a control flow of the air-conditioning apparatus in accordance with Embodiment 1 of the present invention during starting heating operation.
[Fig. 11] Fig. 11 shows a state where a four-way valve of the air-conditioning apparatus in accordance with Embodiment 1 of the present invention is switched.
[Fig. 12] Fig. 12 shows a comparative example of the air-conditioning apparatus in accordance with Embodiment 1 of the present invention.
[Fig. 13] Fig. 13 shows action of the air-conditioning apparatus in accordance with Embodiment 1 of the present invention.
[Fig. 14] Fig. 14 shows action of the air-conditioning apparatus in accordance with Embodiment 1 of the present invention.
[Fig. 15] Fig. 15 shows a structure of an air-conditioning apparatus in accordance with Embodiment 2 of the present invention.
[Fig. 16] Fig. 16 shows a control flow of the air-conditioning apparatus in accordance with Embodiment 2 of the present invention during finishing cooling operation and during finishing defrosting operation.
[Fig. 17] Fig. 17 shows a structure of an air-conditioning apparatus in accordance with Embodiment 3 of the present invention.
[Fig. 18] Fig. 18 shows a control flow of the air-conditioning apparatus in accordance with Embodiment 3 of the present invention during finishing cooling operation and during finishing defrosting operation.

### Description of Embodiments

The air-conditioning apparatus in accordance with the present invention will be described hereinafter with reference to the drawings. The air-conditioning apparatus in accordance with the present invention circulates refrigerant in a refrigerant circuit to form a refrigeration cycle (heat pump cycle) and perform heating operation and at least one of cooling operation and defrosting operation. Hereinafter, although a case where one indoor unit is connected to one outdoor unit will be described, a plurality of indoor units may be connected to one outdoor unit. In addition, a level of temperature, pressure, or the like, described below, is not determined by a relationship with an absolute value, but is relatively determined in accordance with a state, operation, and the like of a device. Further, a structure, operation, or the like, described below, is only an example, so that the air-conditioning apparatus in accordance with the present invention is not limited to such a structure, operation, or the like. In each of the drawings, an identical or similar member or portion is designated by the same reference sign. An illustration of a detailed structure is appropriately simplified or omitted. In addition, a duplicated or similar description is appropriately simplified or omitted.

### Embodiment 1

The air-conditioning apparatus in accordance with Embodiment 1 will be described.

### <Structure of Air-conditioning Apparatus>

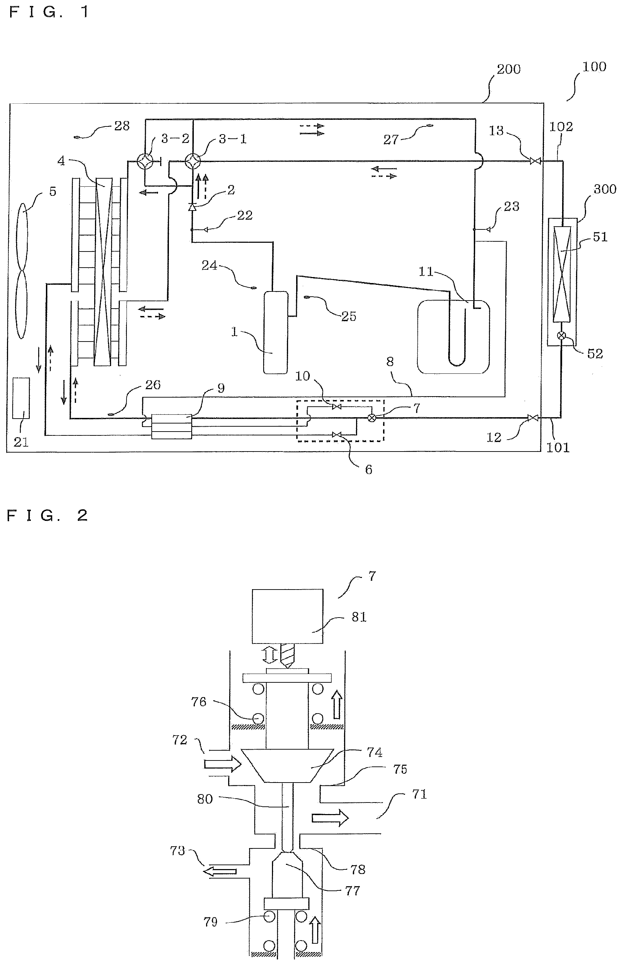

Hereinafter, a structure of the air-conditioning apparatus in accordance with Embodiment 1 will be described. Fig. 1 shows the structure of the air-conditioning apparatus in accordance with Embodiment 1 of the present invention. As shown in Fig. 1, an air-conditioning apparatus 100 includes an outdoor unit 200 and an indoor unit 300.

The outdoor unit 200 includes a compressor 1, a check valve 2, four-way valves 3 (four-way valves 3-1 and 3-2), an outdoor side heat exchanger 4, an air-sending device 5, an outdoor side heat exchanger capacity control solenoid valve 6 serving as a storage adjusting unit (hereinafter referred to as a capacity control solenoid valve 6), a flow rate adjustable three-way valve 7, a bypass pipe 8, a subcooling heat exchanger 9, a bypass flow control solenoid valve 10, an accumulator 11, on-off valves 12 and 13, and a controller 21. The indoor unit 300 includes an indoor side heat exchanger 51, and an indoor side flow control valve 52.

The outdoor unit 200 and the indoor unit 300 are connected to each other with pipes 101 and 102 through the on-off valves 12 and 13. The compressor 1, the check valve 2, the four-way valve 3, the outdoor side heat exchanger 4, the capacity control solenoid valve 6, the flow rate adjustable three-way valve 7, the on-off valve 12, the indoor side flow control valve 52, the indoor side heat exchanger 51, the on-off valve 13, and the accumulator 11, are provided to a main refrigerant circuit.

The compressor 1 includes an inverter driving circuit to enable capacity (an amount of feeding refrigerant per unit time) of the compressor 1 to be finely changed by arbitrarily changing a drive frequency. The compressor 1 may not include an inverter driving circuit and the drive frequency may be fixed.

The check valve 2 is provided on a discharge side of the compressor 1. The check valve 2 prevents a backflow of refrigerant. The main refrigerant circuit branches into two lines on downstream side of the check valve 2. The two lines are provided with the respective four-way valves 3-1 and 3-2. The four-way valves 3-1 and 3-2 switch a flow of the refrigerant in response to a command from the controller 21. Here, the four-way valve 3-2 also serves as a storage adjusting unit.

The outdoor side heat exchanger 4 exchanges heat between refrigerant and air (outdoor air). The outdoor side heat exchanger 4 serves as an evaporator during heating operation to exchange heat between the refrigerant having low pressure flowing from the flow rate adjustable three-way valve 7 and the air, and to evaporate and vaporize the refrigerant. In addition, the outdoor side heat exchanger 4 serves as a condenser during cooling operation. Here, the outdoor side heat exchanger 4 stores the refrigerant (liquid refrigerant) during finishing the cooling operation and the defrosting operation. Further, the outdoor side heat exchanger 4 includes inflow-outflow channels of two lines. The outdoor side heat exchanger 4 includes the inflow-outflow channels of two lines to, for example, control timing of feeding the refrigerant, stored during transition to heating operation, to the accumulator 11. A plurality of outdoor side heat exchangers 4 may be connected to each other in parallel to form inflow-outflow channels of two lines.

The air-sending device 5 is provided to allow the outdoor side heat exchanger 4 to efficiently exchange heat between refrigerant and air. The air-sending device 5 includes an inverter driving circuit as with the compressor 1 to enable a rotational speed of the fan to be finely changed by arbitrarily changing a drive frequency of the fan motor. The air-sending device 5 may not include an inverter driving circuit and the drive frequency may be fixed.

The capacity control solenoid valve 6 is an on-off valve. The capacity control solenoid valve 6 controls timing of storing the refrigerant above and timing of feeding the refrigerant stored above to the accumulator 11 in the outdoor side heat exchanger 4. In addition, the capacity control solenoid valve 6 controls a flow of the refrigerant in the inflow-outflow channel of one line of the outdoor side heat exchanger 4 in conjunction with the four-way valve 3-2.

The flow rate adjustable three-way valve 7 is provided at a position between a confluence of the two lines above and the on-off valve 12. Fig. 2 shows a structure of the flow rate adjustable three-way valve of the air-conditioning apparatus in accordance with Embodiment 1 of the present invention. As shown in Fig. 2, the flow rate adjustable three-way valve 7 includes openings 71 and 72 through which refrigerant in the main refrigerant circuit flows in and out, and an opening 73 communicating with the bypass pipe 8. In Fig. 2, a flow of refrigerant during cooling operation or defrosting operation is shown by arrow.

A main valve body 74 is provided in a space between the openings 71 and 72 through which the refrigerant in the main refrigerant circuit flows in and out. The main valve body 74 is urged by a first spring 76 in a direction away from a first valve seat 75 arranged coaxially with the main valve body 74. An auxiliary valve body 77 is provided coaxially with the main valve body 74. The auxiliary valve body 77 is urged by a second spring 79 in a direction approaching a second valve seat 78 arranged coaxially with the auxiliary valve body 77. The main valve body 74 is provided at its end with a pressing member 80 so that the auxiliary valve body 77 is pressed by the pressing member 80 in a direction away from the second valve seat 78. The main valve body 74 is driven in an axial direction by an electric actuator 81.

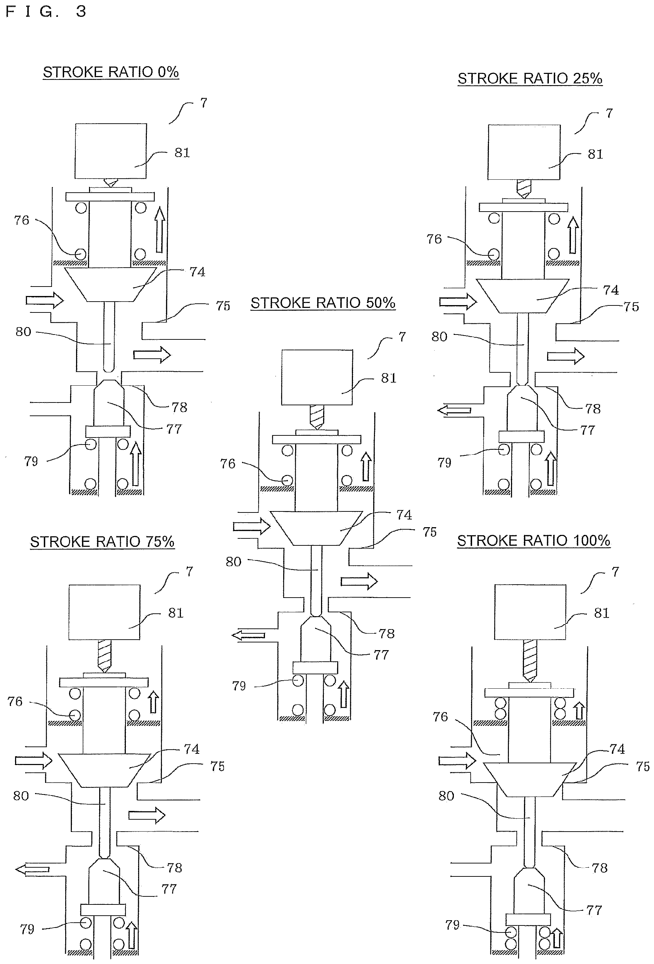

Fig. 3 shows opening and closing states of the flow rate adjustable three-way valve of the air-conditioning apparatus in accordance with Embodiment 1 of the present invention. In Fig. 3, a flow of refrigerant during cooling operation or defrosting operation is shown by arrow. When a stroke ratio of the electric actuator 81 (a ratio converted with a stop position of the electric actuator 81 when an effective stroke of the electric actuator 81 is set to be 100%) is 0%, the main valve body 74 is in a fully open state and the auxiliary valve body 77 is in a fully closed state. When the stroke ratio of the electric actuator 81 increases, an opening degree of the auxiliary valve body 77 becomes an adjustment state while the main valve body 74 is still in the fully open state. When the stroke ratio of the electric actuator 81 increases further, the main valve body 74 and the auxiliary valve body 77 become the fully open state. Then, when the stroke ratio of the electric actuator 81 increases yet further, an opening degree of the main valve body 74 becomes an adjustment state while the auxiliary valve body 77 is still in the fully open state. Subsequently, when the stroke ratio of the electric actuator 81 increases yet further, the main valve body 74 becomes the fully closed state while the auxiliary valve body 77 is still in the fully open state.

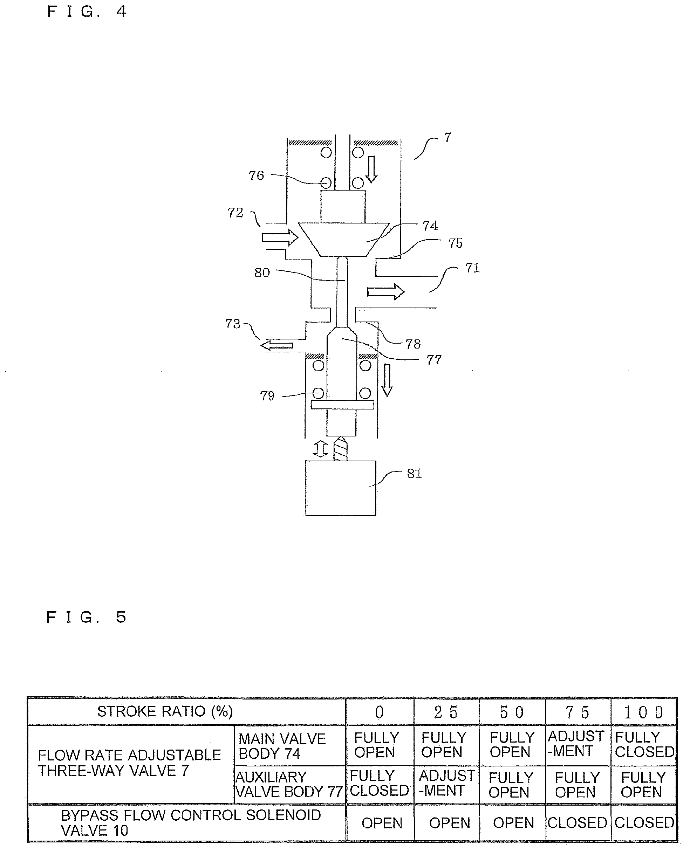

The flow rate adjustable three-way valve 7 is configured as above to enable the opening degree of the main valve body 74 and the opening degree of the auxiliary valve body 77 to be independently adjusted. That is, the flow rate adjustable three-way valve 7 adjusts a flow rate of only the refrigerant flowing through the main refrigerant circuit when the opening degree of the main valve body 74 is adjusted. In addition, the flow rate adjustable three-way valve 7 adjusts a flow rate of only the refrigerant flowing through the bypass pipe 8 when the opening degree of the auxiliary valve body 77 is adjusted. Fig. 4 shows a structure of the flow rate adjustable three-way valve of the air-conditioning apparatus in accordance with Embodiment 1 of the present invention. As shown in Fig. 4, the pressing member 80 and the electric actuator 81 may be provided to the auxiliary valve body 77 side.

The subcooling heat exchanger 9 exchanges heat between refrigerant flowing through the main refrigerant circuit and refrigerant flowing through the bypass pipe 8. The bypass flow control solenoid valve 10 is provided to the bypass pipe 8 at a position between the flow rate adjustable three-way valve 7 and the subcooling heat exchanger 9. The bypass flow control solenoid valve 10 is an on-off valve. The bypass flow control solenoid valve 10 may be a flow control valve. Particularly, when subcooling of refrigerant is required during cooling operation, the bypass flow control solenoid valve 10 becomes an open state to allow the refrigerant flowing through the main refrigerant circuit to be subcooled by the subcooling heat exchanger 9 and to be supplied to the indoor unit 300. Then the refrigerant in the bypass pipe 8 returns to an upstream side of the accumulator 11. The accumulator 11, for example, is a device storing a surplus liquid refrigerant.

Fig. 5 shows a relationship between opening and closing states of the flow rate adjustable three-way valve and the bypass flow control solenoid valve, of the air-conditioning apparatus in accordance with Embodiment 1 of the present invention. The flow rate adjustable three-way valve 7 adjusts an amount of refrigerant flowing through the main refrigerant circuit during heating operation, for example. Then, a stroke ratio of the electric actuator 81 is set so that the opening degree of the main valve body 74 becomes the adjustment state or the fully closed state. However, if the stroke ratio of the electric actuator 81 is set as above, the auxiliary valve body 77 becomes the fully open state to allow the refrigerant to flow into the bypass pipe 8. Thus, as shown in Fig. 5, when the opening degree of the main valve body 74 becomes the adjustment state or the fully closed state particularly during heating operation, the bypass flow control solenoid valve 10 is controlled to become a closed state.

The indoor side heat exchanger 51 exchanges heat between refrigerant and air (indoor air). The indoor side heat exchanger 51 serves as a condenser during heating operation to exchange heat between refrigerant flowing from the pipe 102 and air, to condense and liquidize the refrigerant (or to allow the refrigerant to become two-phase gas-liquid), and to allow the refrigerant to flow into the pipe 101. In addition, the indoor side heat exchanger 51 serves as an evaporator during cooling operation. The indoor side flow control valve 52 changes its opening degree to adjust pressure of the refrigerant, and the like in the indoor side heat exchanger 51.

The controller 21 includes a microcomputer, for example. To the controller 21, a first pressure sensor 22, a second pressure sensor 23, a first temperature sensor 24, a second temperature sensor 25, a third temperature sensor 26, a fourth temperature sensor 27, and a fifth temperature sensor 28 are connected. The controller 21 acquires data on the refrigerant in the refrigerant circuit, such as pressure and temperature, from each of the sensors to control drive of each of actuators (such as the compressor 1, the four-way valves 3-1 and 3-2, the air-sending device 5, and the electric actuator 81).

As shown in Fig. 1, the first pressure sensor 22 is provided at a position between the compressor 1 and the four-way valve 3 to detect pressure (pressure on a high-pressure side) of refrigerant discharged from the compressor 1. The second pressure sensor 23 is provided to an upstream side of the accumulator 11 to detect pressure (pressure on a low-pressure side) of refrigerant sucked into the compressor 1. The first temperature sensor 24 is provided at a position between the compressor 1 and the four-way valve 3 to detect temperature of the refrigerant discharged from the compressor 1. The second temperature sensor 25 is provided at a position between the accumulator 11 and the compressor 1 to detect temperature of the refrigerant sucked into the compressor 1. The third temperature sensor 26 is provided at a position between the outdoor side heat exchanger 4 and the subcooling heat exchanger 9 to detect temperature of refrigerant flowing from the outdoor side heat exchanger 4 to the subcooling heat exchanger 9. The fourth temperature sensor 27 is provided at a position between the outdoor side heat exchanger 4 and the accumulator 11 to detect temperature of refrigerant flowing from the outdoor side heat exchanger 4 to the accumulator 11. The fifth temperature sensor 28 detects ambient temperature of the outdoor unit 200.

### <Operation of Air-conditioning Apparatus>

Hereinafter, operation of the air-conditioning apparatus in accordance with Embodiment 1 will be described.

### (Operation during Heating Operation)

Operation of the air-conditioning apparatus 100 during heating operation will be described. In Fig. 1, an arrow of a dotted line shows a flow of refrigerant during heating operation. A gas refrigerant having high temperature and high pressure discharged from the compressor 1 flows into the pipe 102 through the four-way valve 3-1. The refrigerant supplied to the indoor unit 300 through the pipe 102 is condensed and liquidized by the indoor side heat exchanger 51, and then is reduced in pressure by the indoor side flow control valve 52 to become a two-phase refrigerant that is close to a saturated liquid state of intermediate pressure. The refrigerant having intermediate pressure flows into the outdoor unit 200 through the pipe 101. The refrigerant having intermediate pressure flowing into the outdoor unit 200 is appropriately adjusted for its flow rate by the flow rate adjustable three-way valve 7 to become a two-phase state of low pressure. The refrigerant in the two-phase state of low pressure is evaporated and vaporized by the outdoor side heat exchanger 4, and then is sucked into the compressor 1 again through the accumulator 11.

### (Operation during Cooling Operation and Defrosting Operation)

Operation of the air-conditioning apparatus 100 during cooling operation and defrosting operation will be described. In Fig. 1, an arrow of a solid line shows a flow of refrigerant during cooling operation and defrosting operation. A gas refrigerant having high temperature and high pressure discharged from the compressor 1 flows into the outdoor side heat exchanger 4 through the four-way valves 3-1 and 3-2. The air-sending device 5 is driven during cooling operation, and is not driven during defrosting operation. The refrigerant is condensed and liquidized by the outdoor side heat exchanger 4 to flow into the indoor unit 300 through the pipe 101. Then, the refrigerant flows into the outdoor unit 200 through the indoor side flow control valve 52, the indoor side heat exchanger 51, and the pipe 102. Subsequently, the refrigerant flows into the accumulator 11 through the four-way valve 3-1, and then is sucked into the compressor 1 again.

During cooling operation and defrosting operation, the flow rate adjustable three-way valve 7 causes the opening 73 communicating with the bypass pipe 8 to be in a fully open state or an adjustment state so that refrigerant is supplied to the bypass pipe 8. The refrigerant flowing through the bypass pipe 8 is reduced in pressure when passing through the flow rate adjustable three-way valve 7, and refrigerant flowing through the main refrigerant circuit is subcooled by the subcooling heat exchanger 9. During cooling operation and defrosting operation, the flow rate adjustable three-way valve 7 may cause the opening 73 communicating with the bypass pipe 8 to be in a fully closed state so that the refrigerant flowing through the main refrigerant circuit is not subcooled by the subcooling heat exchanger 9.

### (Operation during Finishing Cooling Operation)

Operation of the air-conditioning apparatus 100 during finishing cooling operation will be described. During finishing cooling operation, the controller 21 performs processing of reducing an amount of refrigerant in the accumulator 11 when heating operation is performed. That is, the refrigerant is stored in other parts than the accumulator 11 in the refrigerant circuit to reduce the amount of the refrigerant in the accumulator 11, and during heating operation, the refrigerant is allowed to flow into the accumulator 11 while the amount of the refrigerant in the accumulator 11 is controlled. As a result, the heating operation is promptly stabilized.

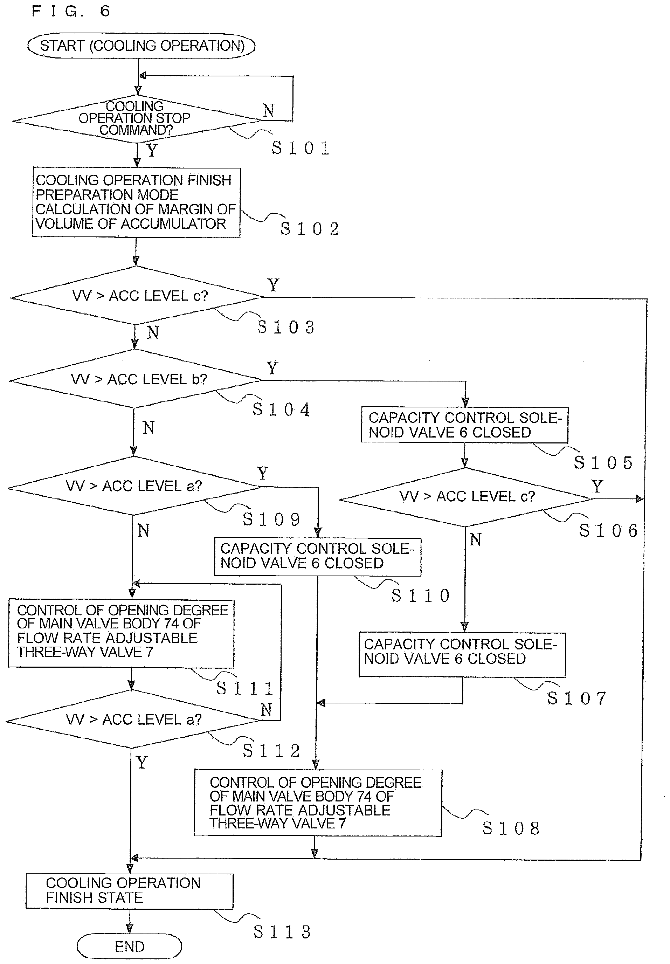

Fig. 6 shows a control flow of the air-conditioning apparatus in accordance with Embodiment 1 of the present invention during finishing cooling operation. As shown in Fig. 6, the controller 21 determines whether a stop command for cooling operation is given during the cooling operation at S101. The stop command for the cooling operation may be a start command for heating operation. When the stop command for the cooling operation is given, processing proceeds to S102 to shift to a preparation mode of finishing cooling operation. If not, the processing proceeds to S101. The processing may proceed to S102 only when a stop command for cooling operation and a start command for heating operation are given simultaneously.

At S102, the controller 21 first calculates distribution of the amount of refrigerant of the air-conditioning apparatus 100 (a distribution amount of refrigerant). For example, during cooling operation, the refrigerant is mainly distributed in the accumulator 11, the outdoor side heat exchanger 4, and the pipe 101. Thus, the controller 21 calculates the amount of the refrigerant (liquid refrigerant) in each of the accumulator 11, the outdoor side heat exchanger 4, and the pipe 101.

The controller 21 calculates a degree of superheat of suction TsSH of the compressor 1, or a degree of superheat of discharge TdSH of the compressor 1 to calculate the amount of refrigerant (liquid refrigerant) in the accumulator 11. Here, the degree of superheat of suction TsSH is as follows: TsSH = (detection temperature of the second temperature sensor 25) - (saturated temperature converted from detection pressure of the second pressure sensor 23). In addition, the degree of superheat of discharge TdSH is as follows: TdSH = (detection temperature of the first temperature sensor 24) - (saturated temperature converted from detection pressure of the first pressure sensor 22). Then, an amount Va of the refrigerant (liquid refrigerant) in the accumulator 11 is estimated based on the degree of superheat of suction TsSH or the degree of superheat of discharge TdSH of the compressor 1.

In addition, the controller 21 calculates density ρ (TH3) of liquid refrigerant in the outdoor side heat exchanger 4 from detection temperature TH3 of the third temperature sensor 26 to calculate the amount of refrigerant (liquid refrigerant) in the outdoor side heat exchanger 4. Then, an amount Vh of the refrigerant (liquid refrigerant) in the outdoor side heat exchanger 4 is estimated by using predetermined inner capacity Vhex of the outdoor side heat exchanger 4 as follows: Vh = ρ (TH3) × Vhex.

Further, the controller 21 calculates the density ρ (TH3) of liquid refrigerant in the pipe 101 from the detection temperature TH3 of the third temperature sensor 26 for the amount of the refrigerant (liquid refrigerant) in the pipe 101. Then, an amount Vp of the refrigerant (liquid refrigerant) in the pipe 101 is estimated by using predetermined inner capacity Vlp of the pipe 101 as follows: Vp = ρ (TH3) × Vlp.

Then, the controller 21 calculates a margin of volume VV with respect to a permissible amount Vmax in the accumulator 11 based on a calculated distribution amount of refrigerant of each portion. Here, the margin of volume VV is calculated by the following expression: VV = Vmax - Va - Vh - Vp, where Vmax is a permissible amount of the accumulator 11, Va is a distribution amount of the refrigerant (liquid refrigerant) in the accumulator 11, Vh is a distribution amount of the refrigerant (liquid refrigerant) in the outdoor side heat exchanger 4, and Vp is a distribution amount of the refrigerant (liquid refrigerant) in the pipe 101. The controller 21 proceeds to S103 after the margin of volume VV is calculated.

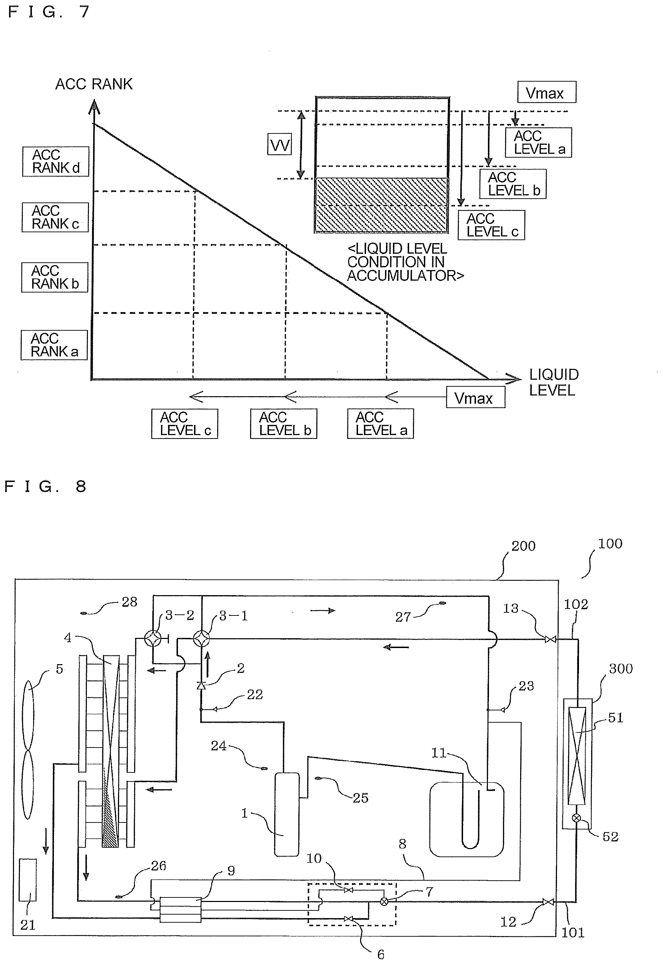

Fig. 7 shows a relationship between liquid level height in an accumulator and an ACC rank, of the air-conditioning apparatus in accordance with Embodiment 1 of the present invention. The controller 21 determines which stage of a plurality of stages corresponds to liquid level height of liquid refrigerant existing in the accumulator 11, such as which rank of an ACC rank a, an ACC rank b, an ACC rank c, and an ACC rank d, corresponds to the calculated margin of volume VV. Here, as shown in Fig. 7, the ACC rank a is a state where the liquid level height of the accumulator 11 is high so that the margin of volume VV is minimum, and the margin of volume VV increases in the order of the ACC rank b, the ACC rank c, and the ACC rank d. Then, the controller 21 performs processing and control according to a determined rank.

Thus, the controller 21 compares the margin of volume VV with an ACC level c, an ACC level b, and an ACC level a, each of which is a threshold value. First, the controller 21 compares the margin of volume VV with the ACC level c in S103. When the margin of volume VV is more than the ACC level c, the controller 21 proceeds to S113 to shift to a state of finishing cooling operation. If not, the controller 21 proceeds to S104.

The controller 21 compares the margin of volume VV with the ACC level b at S104. When the margin of volume VV is more than the ACC level b, the processing of the controller 21 proceeds to S105. If not, the controller 21 proceeds to S109.

Fig. 8 shows a flow of refrigerant when a capacity control solenoid valve of the air-conditioning apparatus in accordance with Embodiment 1 of the present invention is closed. The controller 21 causes the capacity control solenoid valve 6 to be closed during predetermined first reference time T1 at S105. As shown in Fig. 8, since the capacity control solenoid valve 6 is closed during the first reference time T1, the refrigerant in the accumulator 11 is transferred into the outdoor side heat exchanger 4 so that liquid refrigerant is stored in a part of the inside of the outdoor side heat exchanger 4. Here, the first reference time T1 may be determined in accordance with inner capacity of the outdoor side heat exchanger 4. In addition, the first reference time T1 may be changed in accordance with a relationship between the inner capacity of the outdoor side heat exchanger 4 and the amount Vh of the refrigerant (liquid refrigerant) in the outdoor side heat exchanger 4. Further, the amount of the refrigerant (liquid refrigerant) in the outdoor side heat exchanger 4 is estimated from outside-air temperature, drive frequency of the compressor 1, detection temperature of the fifth temperature sensor 28, and the like so that the first reference time T1 may be changed in accordance with a result of the estimation.

The controller 21 proceeds to S106 after elapse of the first reference time T1 to compare the margin of volume VV and the ACC level c again. When the margin of volume VV is more than the ACC level c, the controller 21 proceeds to S113 to shift to the state of finishing cooling operation. If not, the controller 21 proceeds to S107.

The controller 21 causes the capacity control solenoid valve 6 to be closed during predetermined second reference time T2 at S107 to maximize an amount of the liquid refrigerant stored in outdoor side heat exchanger 4.

Then, the controller 21 proceeds to S108 after elapse of the second reference time T2 to allow the refrigerant to be stored in the pipe 101 until the margin of volume VV exceeds the ACC level c by controlling the opening degree of the main valve body 74 of the flow rate adjustable three-way valve 7. The controller 21 calculates the amount Vp of the refrigerant (liquid refrigerant) in the pipe 101 under a condition where the margin of volume VV is more than the ACC level c. Subsequently, the controller 21 calculates the amount Vp of the refrigerant (liquid refrigerant) in the pipe 101 that satisfies the following expression: VV = Vmax - Va - Vh - Vp > the ACC level c, from the margin of volume VV, the amount Va of the refrigerant (liquid refrigerant) in the accumulator 11, the amount Vh of the refrigerant (liquid refrigerant) in the outdoor side heat exchanger 4, and the permissible amount Vmax of the accumulator 11. Then, the controller 21 controls the opening degree of the main valve body 74 of the flow rate adjustable three-way valve 7 to be set at PL1 (TH3) on the basis of the amount Vp of the refrigerant (liquid refrigerant) in the pipe 101, Vp = ρ (TH3) × Vlp, so that the calculated amount Vp of the refrigerant (liquid refrigerant) is stored in the pipe 101, and then proceeds to S113 to shift to the state of finishing cooling operation.

The controller 21 compares the margin of volume VV with the ACC level a at S109. When the margin of volume VV is more than the ACC level a, the controller 21 proceeds to S110 to cause the capacity control solenoid valve 6 to be closed during the first reference time T1, as with S105. If not, the controller 21 proceeds to S111.

The controller 21 proceeds to S108 after elapse of the first reference time T1 to control the opening degree of the main valve body 74 of the flow rate adjustable three-way valve 7 to be set at PL1 (TH3) to allow the refrigerant to be stored in the pipe 101, and then proceeds to S113 to shift to the state of finishing cooling operation.

At S111, the controller 21 determines that the margin of volume VV cannot be more than the ACC level c even when the refrigerant is stored in the outdoor side heat exchanger 4 and allow the refrigerant to be stored in the pipe 101. That is, the controller 21 calculates the amount Vp of the refrigerant (liquid refrigerant) in the pipe 101, and controls the opening degree of the main valve body 74 of the flow rate adjustable three-way valve 7 to be set at PL1 (TH3) so that the amount Vp of the refrigerant (liquid refrigerant) required in the pipe 101 is maintained, and then proceeds to S112.

At S112, the controller 21 allows the refrigerant to be stored in the pipe 101 until the margin of volume VV becomes more than the ACC level a, and then proceeds to S113 to shift to the state of finishing cooling operation.

### (Operation during Finishing Defrosting Operation)

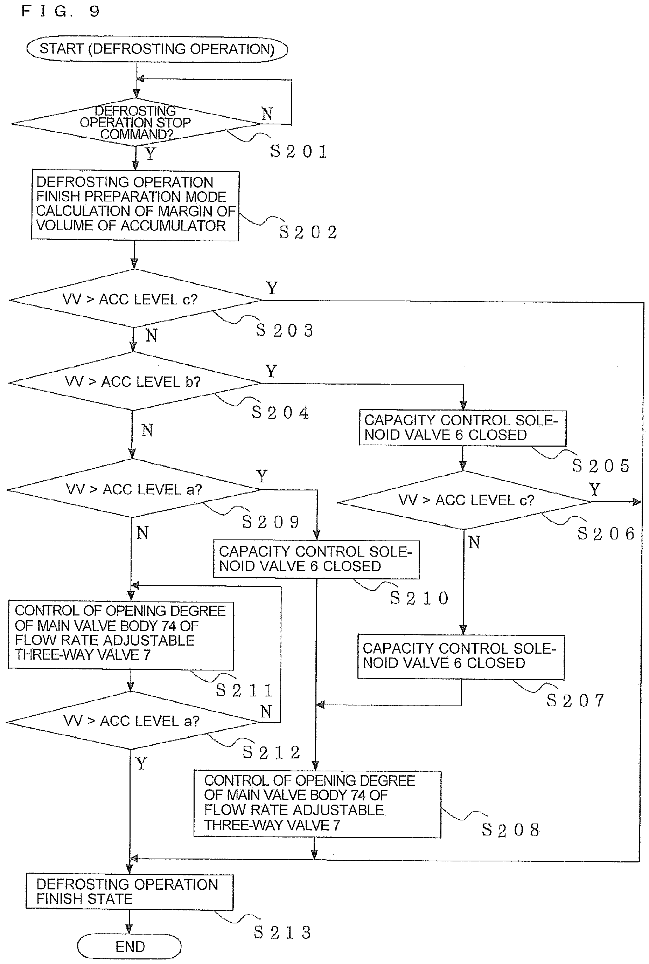

Operation of the air-conditioning apparatus 100 during finishing defrosting operation will be described. During finishing defrosting operation, the controller 21 performs processing of reducing an amount of refrigerant in the accumulator 11 when heating operation is performed, as with during finishing cooling operation. Fig. 9 shows a control flow of the air-conditioning apparatus in accordance with Embodiment 1 of the present invention during finishing defrosting operation. Because S201 to S213 in Fig. 9 are identical with S101 to S113 in Fig. 6, description thereof will be omitted.

### (Operation during Starting Heating Operation)

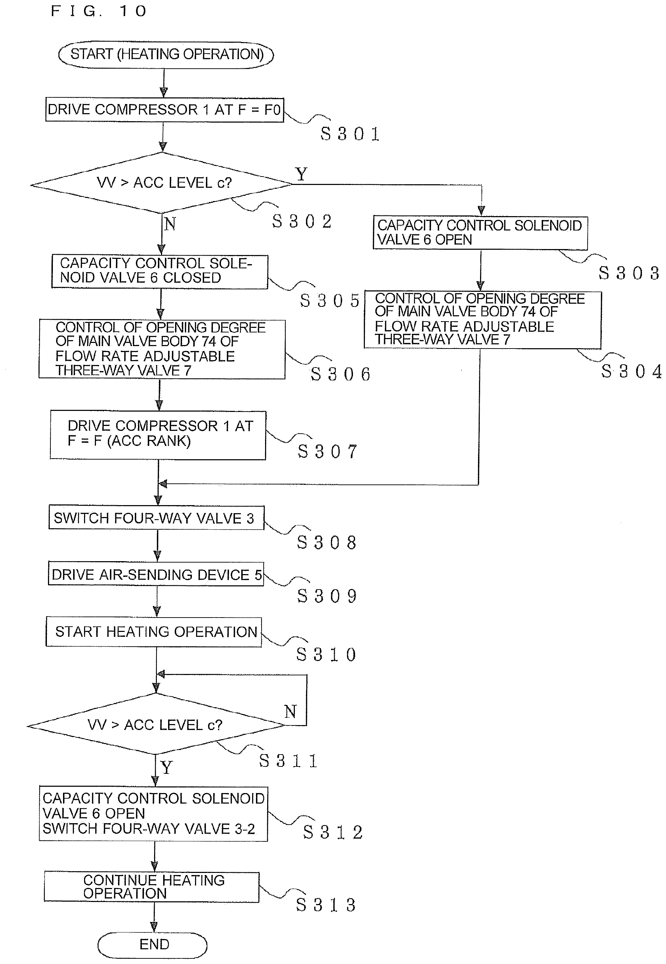

Operation of the air-conditioning apparatus 100 during starting heating operation will be described. Fig. 10 shows a control flow of the air-conditioning apparatus in accordance with Embodiment 1 of the present invention during starting heating operation. As shown in Fig. 10, when shifting to heating operation, the controller 21 causes the compressor 1 to be driven at a predetermined frequency F0 at S301, and then proceeds to S302.

At S302, the controller 21 compares the margin of volume VV with the ACC level c. When the margin of volume VV is more than the ACC level c, the controller 21 proceeds to S303, and if not, proceeds to S305. At S303, the controller 21 causes the capacity control solenoid valve 6 to be opened, and then proceeds to S304. Here, when the capacity control solenoid valve 6 is already opened, the valve stays in the open state.

At S304, the controller 21 controls the opening degree of the main valve body 74 of the flow rate adjustable three-way valve 7 to be set at a predetermined reference opening degree PL0 at the time of starting heating operation (hereinafter referred to as a reference opening degree PL0 at the time of starting heating), and then proceeds to S308. The reference opening degree PL0 at the time of starting heating satisfies the following: PL0 > PL1 (TH3). In addition, the reference opening degree PL0 at the time of starting heating is a predetermined fixed value regardless of detection temperature.

At S305, the controller 21 causes the capacity control solenoid valve 6 to be closed, and then proceeds to S306. At S305, liquid refrigerant stored (condensed) in the outdoor side heat exchanger 4 is prevented from circulating through the refrigerant circuit to flow into the accumulator 11. At S306, the controller 21 controls the opening degree of the main valve body 74 of the flow rate adjustable three-way valve 7 to be set at PL1 (TH3), and then proceeds to S307. Here, when the capacity control solenoid valve 6 is already closed, the valve stays in the closed state. In addition, when the opening degree of the main valve body 74 of the flow rate adjustable three-way valve 7 is PL1 (TH3), the opening degree stays at PL1 (TH3).

At S307, the controller 21 determines the ACC rank of liquid refrigerant existing in the accumulator 11, shown in Fig. 7. The controller 21 causes the compressor 1 to be driven at a frequency F (ACC rank) corresponding to the ACC rank, and then proceeds to S308. Here, when frequencies F (ACC ranks) corresponding to the ACC rank a, the ACC rank b, the ACC rank c, and the ACC rank d are set to Fa, Fb, Fc, and Fd, respectively, each of the frequencies satisfies the following relationship: F0 > Fd > Fc > Fb > Fa. For example, if the compressor 1 is driven at the frequency F0 under a condition where a liquid level in the accumulator 11 is high, the refrigerant flows into the accumulator 11 at a high speed. As a result, the liquid level in the accumulator 11 may not be stable. If the liquid level is not stable, an amount of liquid back to a suction side of the compressor 1 greatly increases. Thus, the frequency F (ACC rank) is set so that an inflow speed of the refrigerant into the accumulator 11 decreases as the liquid level of the accumulator 11 increases (as the ACC rank determined becomes close to the ACC rank a).

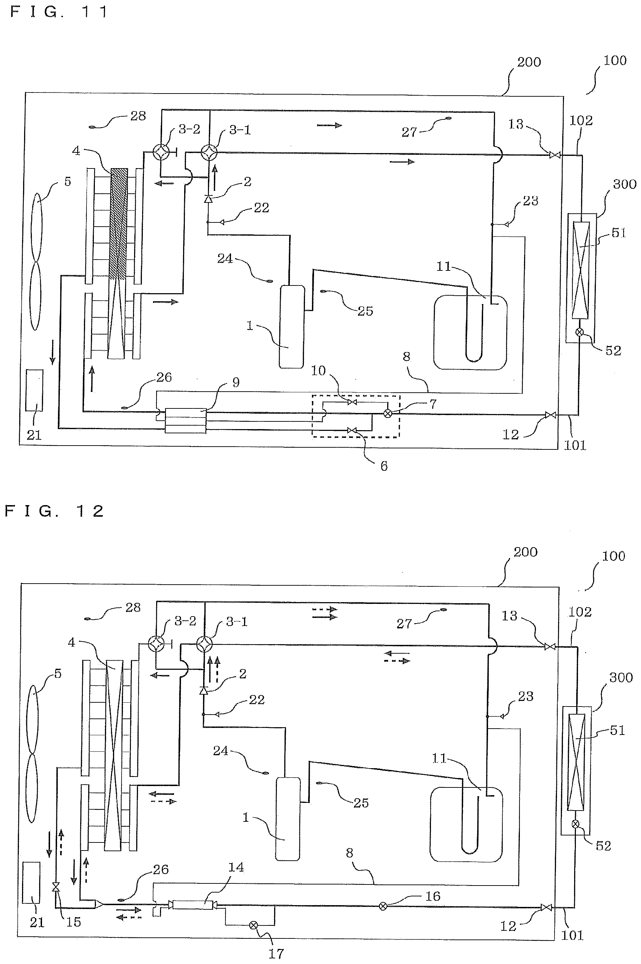

At S308, the controller 21 switches the four-way valve 3-1 and the four-way valve 3-2 to switch the refrigerant circuit for shifting from cooling operation or defrosting operation to heating operation, and then proceeds to S309. Fig. 11 shows a state where the four-way valve of the air-conditioning apparatus in accordance with Embodiment 1 of the present invention is switched. When the capacity control solenoid valve 6 is closed at S305 as shown in Fig. 11, the controller 21 does not switch the four-way valve 3-2 communicating with an inlet of refrigerant on a side where the capacity control solenoid valve 6 of the outdoor side heat exchanger 4 is provided. Accordingly, gas refrigerant having high pressure discharged from the compressor 1 is divided into the four-way valve 3-1 and the four-way valve 3-2, and the gas refrigerant having high pressure flowing into the four-way valve 3-1 flows into the indoor unit 300 through the pipe 102 of gas refrigerant side to form a circulation channel of heating operation. On the other hand, the gas refrigerant having high pressure flowing into the four-way valve 3-2 is stored in a part of the outdoor side heat exchanger 4 since the capacity control solenoid valve 6 is closed. At the time, because pressure in the inlet of refrigerant of the outdoor side heat exchanger 4 is higher than pressure in the outdoor side heat exchanger 4, the refrigerant stored in the outdoor side heat exchanger 4 does not flow backward.

At S309, the controller 21 causes the air-sending device 5 to be driven, and then proceeds to S310. At S310, the controller 21 starts heating operation, and then proceeds to S311. At S311, the controller 21 compares the margin of volume VV with the ACC level c, and proceeds to S312 when the margin of volume VV becomes more than the ACC level c.

At S312, the controller 21 causes the capacity control solenoid valve 6 to be opened and switches the four-way valve 3-2, and then proceeds to S313 to continue the heating operation. Here, when the capacity control solenoid valve 6 is already opened, the valve stays in the open state. In such a case, the four-way valve 3-2 is already switched, so that the valve is not to be switched. At the time, although the liquid refrigerant stored in the outdoor side heat exchanger 4 flows into the accumulator 11 through the four-way valve 3-2, the refrigerant does not overflow beyond the permissible amount Vmax of the accumulator 11 because the margin of volume VV of the accumulator 11 (the permissible amount Vmax of the accumulator 11) is designed so that the margin of volume VV is more than the amount Vh of the refrigerant (liquid refrigerant) in the outdoor side heat exchanger 4.

### <Action of Air-conditioning Apparatus>

Action of the air-conditioning apparatus 100 will be described. In the air-conditioning apparatus 100, since refrigerant does not overflow beyond the permissible amount Vmax of the accumulator 11 when cooling operation or defrosting operation is shifted to heating operation, reliability of the air-conditioning apparatus 100 (particularly, the compressor 1) is secured.

Fig. 12 shows a comparative example of the air-conditioning apparatus in accordance with Embodiment 1 of the present invention. Although same operation as that of the air-conditioning apparatus 100 can be performed even by a structure of the comparative example shown in Fig. 12, the air-conditioning apparatus 100 involves action such as described below due to application of the structure shown in Fig. 1.

In the comparative example, two lines branching on a discharge side of the compressor 1 merge at a position between the outdoor side heat exchanger 4 and a subcooling heat exchanger 14, and one of the two lines is provided with a capacity control solenoid valve 15. That is, in the comparative example, a branching portion to the bypass pipe 8 is provided at a position between a flow control valve 16 provided to the main refrigerant circuit and the subcooling heat exchanger 14, and a flow control valve 17 is provided to the bypass pipe 8.

On the other hand, in the air-conditioning apparatus 100, since the two flow control valves (the flow control valve 16 and the flow control valve 17) of the comparative example are replaced with one flow control valve (the flow rate adjustable three-way valve 7), low cost of the device is achieved. In addition, for example, the flow rate adjustable three-way valve 7 may serve as a distributor as well as a flow control valve such that a distribution portion is formed in a flow channel between the main valve body 74 and the opening 72 of the flow rate adjustable three-way valve 7. In such a case, a function realized by a distributor provided at a confluence of the two lines between the outdoor side heat exchanger 4 and the subcooling heat exchanger 14 in the comparative example is realized without increasing the number of components to achieve low cost of the device. Further, since the capacity control solenoid valve 15 provided at a position between the outdoor side heat exchanger 4 and the subcooling heat exchanger 14 is replaced with the capacity control solenoid valve 6 provided at a position between the flow rate adjustable three-way valve 7 and the subcooling heat exchanger 9, refrigerant subcooled by the subcooling heat exchanger 9 during cooling operation and during defrosting operation is only required to be stopped to enable a solenoid valve having a small CV value to be applied, thereby achieving low cost of the device.

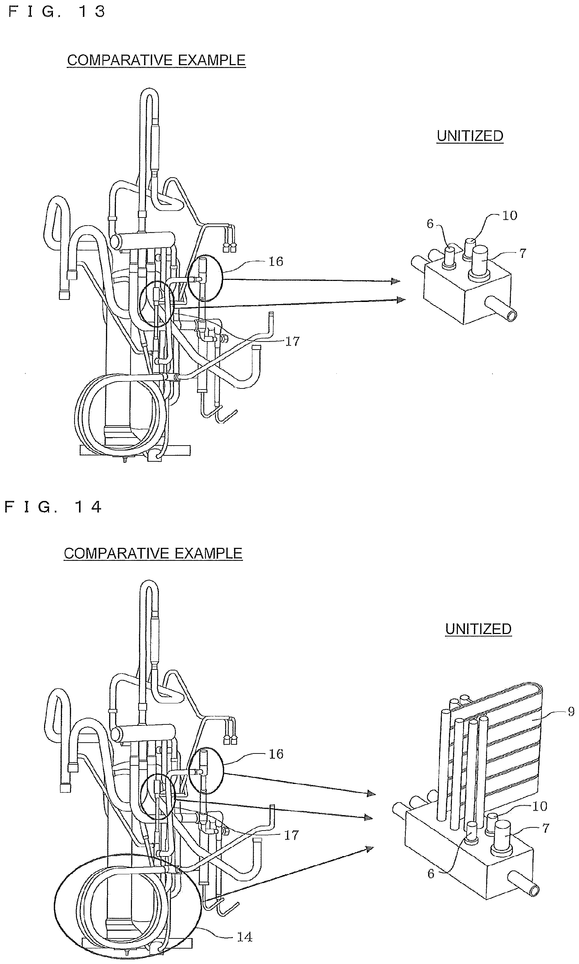

Unlike in the comparative example, in the air-conditioning apparatus 100, the capacity control solenoid valve 6, the flow rate adjustable three-way valve 7, and the bypass flow control solenoid valve 10 are put together in one place so that workability of maintenance and the like is increased. Fig. 13 shows action of the air-conditioning apparatus in accordance with Embodiment 1 of the present invention. In addition, as shown in Fig. 13, the capacity control solenoid valve 6, the flow rate adjustable three-way valve 7, and the bypass flow control solenoid valve 10 may be unitized. In such a case, efficiency of assembly work and the like is improved. Fig. 14 shows action of the air-conditioning apparatus in accordance with Embodiment 1 of the present invention. In addition, as shown in Fig. 14, the capacity control solenoid valve 6, the flow rate adjustable three-way valve 7, the bypass flow control solenoid valve 10, and the subcooling heat exchanger 9 may be unitized. When each of the capacity control solenoid valve 6, the flow rate adjustable three-way valve 7, and the bypass flow control solenoid valve 10 is a cartridge type, the workability of maintenance and the like is further improved. In addition, as shown in Figs. 13 and 14, when components are unitized by using a structure (block), a flow channel in the structure may be provided with a distribution portion serving as the distributor provided at the confluence of the two lines between the outdoor side heat exchanger 4 and the subcooling heat exchanger 14 in the comparative example. In such a case, the number of components is reduced to achieve low cost of the device. In Figs. 13 and 14, the capacity control solenoid valve 15 is not shown.

### Embodiment 2

An air-conditioning apparatus in accordance with Embodiment 2 will be described. Duplicate description of the air-conditioning apparatus in accordance with Embodiment 1 is appropriately simplified or eliminated.

### <Structure of Air-conditioning Apparatus>

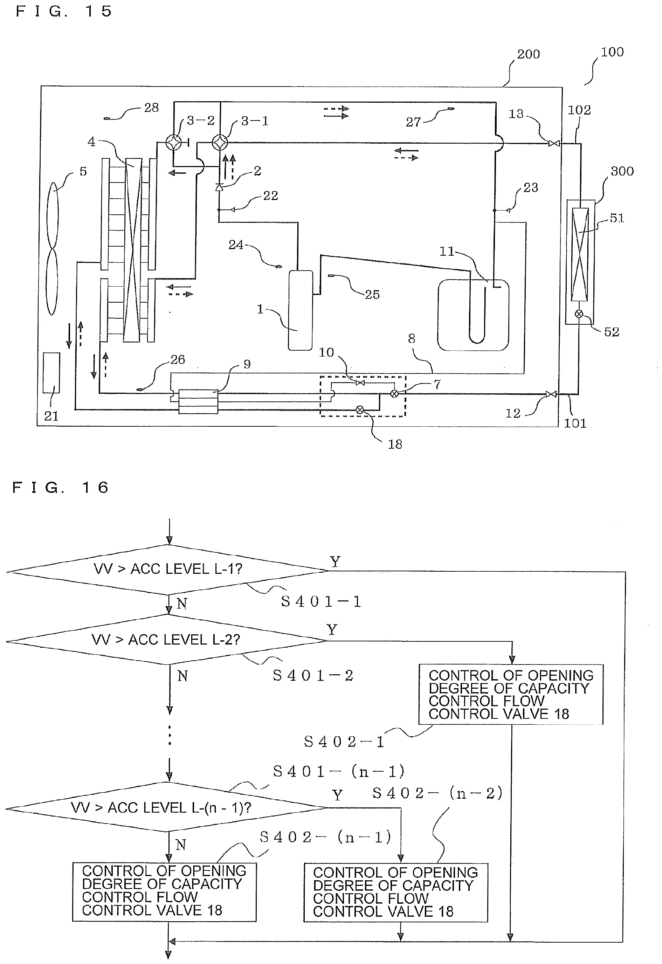

A structure of the air-conditioning apparatus in accordance with Embodiment 2 will be described. Fig. 15 shows the structure of the air-conditioning apparatus in accordance with Embodiment 2 of the present invention. The air-conditioning apparatus 100 includes an outdoor side heat exchanger capacity control flow control valve 18 (hereinafter referred to as a capacity control flow control valve 18) serving as a storage adjusting unit instead of the capacity control solenoid valve 6. The capacity control flow control valve 18 is capable of linearly controlling a flow rate, for example. The capacity control flow control valve 18 adjusts its opening degree in response to a command from the controller 21.

### <Operation of Air-conditioning Apparatus>

Operation of the air-conditioning apparatus in accordance with Embodiment 2 will be described. Fig. 16 shows a control flow of the air-conditioning apparatus in accordance with Embodiment 2 of the present invention during finishing cooling operation, and during finishing defrosting operation. The controller 21 performs control shown in Fig. 16 instead of control shown at S103 to S112 of Fig. 6 and control shown at S203 to S212 of Fig. 9. The controller 21 determines which rank of n ranks corresponds to the calculated margin of volume VV to perform processing and control according to the determined rank.

Thus, at S401-1 to S401-(n - 1), the controller 21 sequentially compares the margin of volume VV with an ACC level L-1, an ACC level L-2, ... , and an ACC level L-(n - 1), each of which is a threshold value. The ACC level L-1, the ACC level L-2, ... , and the ACC level L-(n - 1) satisfy the following relationship: ACC level L-1 > ACC level L-2 > ... > ACC level L-(n - 1).

At S402-1 to S402-(n - 1), the controller 21 sets an opening degree of the capacity control flow control valve 18 at PL-1, PL-2, ... , and PL-(n - 1), respectively. The PL-1, PL-2, ... , and PL-(n - 1) satisfy the following relationship: PL-1 < PL-2 < ... < PL-(n - 1).

In addition, the controller 21 determines which rank of n ranks corresponds to the calculated margin of volume VV as with the control shown in Fig. 16, during transition to heating operation, and controls the opening degree of the capacity control flow control valve 18 according to the determined rank. The controller 21 may cause the flow rate adjustable three-way valve 7 to work together as with the control flows shown in Figs. 6, 9, and 10.

### <Action of Air-conditioning Apparatus>

Action of the air-conditioning apparatus in accordance with Embodiment 2 will be described. In the air-conditioning apparatus 100, the capacity control flow control valve 18 is provided to finely adjust an amount of liquid refrigerant stored in the outdoor side heat exchanger 4 during cooling operation and during defrosting operation. As a result, the amount of liquid refrigerant stored in the outdoor side heat exchanger 4 is reduced to a minimum. In addition, when the liquid refrigerant stored in the outdoor side heat exchanger 4 flows into the accumulator 11 after transition to heating operation, transitional instability of the refrigerant circuit due to variation in pressure and temperature is prevented to achieve a further stable air-conditioning apparatus.

### Embodiment 3

An air-conditioning apparatus in accordance with Embodiment 3 will be described. Duplicate description of the air-conditioning apparatus in accordance with each of Embodiments 1 and 2 is appropriately simplified or eliminated.

### <Structure of Air-conditioning Apparatus>

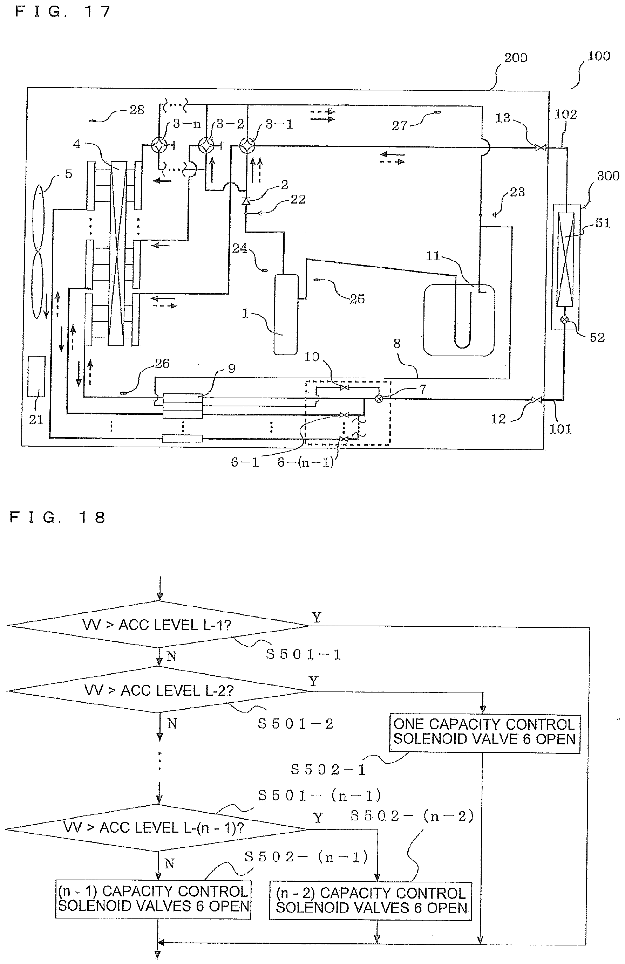

A structure of the air-conditioning apparatus in accordance with Embodiment 3 will be described. Fig. 17 shows the structure of the air-conditioning apparatus in accordance with Embodiment 3 of the present invention. As shown in Fig. 17, the air-conditioning apparatus 100 includes n lines of an inflow-outflow channel to the outdoor side heat exchanger 4. The inflow-outflow channel branches into the n lines on a discharge side of the compressor 1, and the respective lines are provided with four-way valves 3-1, 3-2, ... , and 3-n. The (n - 1) lines in the n lines are provided with capacity control solenoid valves 6-1, 6-2, ... , and 6-(n - 1), respectively, each of which is to be a storage adjusting unit.

### <Operation of Air-conditioning Apparatus>

Operation of the air-conditioning apparatus in accordance with Embodiment 3 will be described. Fig. 18 shows a control flow of the air-conditioning apparatus in accordance with Embodiment 3 of the present invention during finishing cooling operation, and during finishing defrosting operation. The controller 21 performs control shown in Fig. 18 instead of control shown at S103 to S112 of Fig. 6 and control shown at S203 to S212 of Fig. 9. The controller 21 determines which rank of n ranks corresponds to the calculated margin of volume VV to perform processing and control according to the determined rank.

Thus, at S501-1 to S501-(n - 1), the controller 21 sequentially compares the margin of volume VV with an ACC level L-1, an ACC level L-2, ... , and an ACC level L-(n - 1), each of which is a threshold value. The ACC level L-1, the ACC level L-2, ... , and the ACC level L-(n - 1) satisfy the following relationship: ACC level L-1 > ACC level L-2 > ... > ACC level L-(n - 1).

At S502-1 to S502-(n - 1), the controller 21 causes one capacity control solenoid valve 6, two capacity control solenoid valves 6, ... , and (n - 1) capacity control solenoid valves 6 to be in an open state. Here, for example, when each line has the same capacity and the amount of liquid refrigerant stored in the outdoor side heat exchanger 4 at the time when each of the capacity control solenoid valves 6 becomes a closed state is identical, linear control of the amount of liquid refrigerant stored in the outdoor side heat exchanger 4 is achieved.

In addition, the controller 21 determines which rank of n ranks corresponds to the calculated margin of volume VV as with the control shown in Fig. 18, during transition to heating operation, and controls the number of capacity control solenoid valves 6 that are to be in the open state according to the determined rank. The controller 21 may cause the flow rate adjustable three-way valve 7 to work together as with the control flows shown in Figs. 6, 9, and 10. Further, a part of or all of the capacity control solenoid valves 6 may be the capacity control flow control valves 18, and the controller 21 may perform control of a control flow shown in Fig. 16 along with the control shown in Fig. 18.

### <Action of Air-conditioning Apparatus>

Action of the air-conditioning apparatus in accordance with Embodiment 3 will be described. In the air-conditioning apparatus 100, a plurality of capacity control solenoid valves 6 are provided to finely adjust an amount of liquid refrigerant stored in the outdoor side heat exchanger 4 during cooling operation and during defrosting operation. As a result, the amount of liquid refrigerant stored in the outdoor side heat exchanger 4 is reduced to a minimum. In addition, when the liquid refrigerant stored in the outdoor side heat exchanger 4 flows into the accumulator 11 after transition to heating operation, transitional instability of the refrigerant circuit due to variation in pressure and temperature is prevented to achieve a further stable air-conditioning apparatus.

As above, Embodiments 1, 2, and 3 have been described; however, the present invention is not limited to the description of each Embodiment. For example, each Embodiment or each variation can be combined.

### Reference Signs List

100 air-conditioning apparatus 101, 102 pipe 200 outdoor unit
300 indoor unit 1 compressor 2 check valve 3 four-way valve 4 outdoor side heat exchanger 5 air-sending device 6, 15 capacity control solenoid valve 7 flow rate adjustable three-way valve 8 bypass pipe 9, 14 subcooling heat exchanger 10 bypass flow control solenoid valve 11 accumulator 12, 13 on-off valve 16, 17 flow control valve 18 capacity control flow control valve 21 controller 22 first pressure sensor 23 second pressure sensor 24 first temperature sensor 25 second temperature sensor
26 third temperature sensor 27 fourth temperature sensor 28 fifth temperature sensor 51 indoor side heat exchanger 52 indoor side flow control valve71, 72, 73 opening 74 main valve body 75 first valve seat
76 first spring 77 auxiliary valve body 78 second valve seat 79 second spring 80 pressing member 81 electric actuator.

## Claims

1. An air-conditioning apparatus comprising:
a compressor (1);
an outdoor side heat exchanger (4);
a subcooling heat exchanger (9);
an expansion device;
an indoor side heat exchanger (51); and
an accumulator (11), being sequentially connected by pipes,
the expansion device including a flow rate adjustable three-way valve (7),
the flow rate adjustable three-way valve (7) including
an opening connected to a pipe communicating with the outdoor side heat exchanger (4),
an opening connected to a pipe communicating with the indoor side heat exchanger (51), and
an opening connected to a pipe communicating with an upstream side of the accumulator (11) through the subcooling heat exchanger (9),
wherein the subcooling heat exchanger (9) is arranged between the outdoor side heat exchanger (4) and the flow rate adjustable three-way valve (7) and configured to exchange heat between refrigerant flowing through the pipe communicating with the outdoor side heat exchanger (4) and refrigerant flowing through the pipe communicating with the upstream side of the accumulator (11), and
wherein valves (6, 10, 18) are respectively provided to the pipe communicating with the outdoor side heat exchanger (4) at a position between the flow rate adjustable three-way valve (7) and the subcooling heat exchanger (9), and to the pipe communicating with the upstream side of the accumulator (11) at a position between the flow rate adjustable three-way valve (7) and the subcooling heat exchanger (9).

2. The air-conditioning apparatus of claim 1,
wherein the pipe communicating with the outdoor side heat exchanger (4) branches into a plurality of branch pipes at a position between the flow rate adjustable three-way valve (7) and the subcooling heat exchanger (9) to communicate with the outdoor side heat exchanger (4), and
wherein the valve (6, 18) provided to the pipe communicating with the outdoor side heat exchanger (4) is provided to at least one of the plurality of branch pipes.

3. The air-conditioning apparatus of claim 1 or 2,
wherein the flow rate adjustable three-way valve (7) includes a main valve body (74) provided to one flow channel between the opening connected to the pipe communicating with the outdoor side heat exchanger (4) and the opening connected to the pipe communicating with the indoor side heat exchanger (51), and an auxiliary valve body (77) provided to an other flow channel between the one flow channel and the opening connected to the pipe communicating with the upstream side of the accumulator (11), and
wherein an opening degree of the main valve body (74) is adjusted when the auxiliary valve body (77) is fully open, and an opening degree of the auxiliary valve body (77) is adjusted when the main valve body (74) is fully open, and the valve (10) provided to the pipe communicating with the upstream side of the accumulator (11) is caused to be closed when the opening degree of the main valve body (74) is adjusted, and is caused to be open when the opening degree of the auxiliary valve body (77) is adjusted.

4. The air-conditioning apparatus of any one of claims 1 to 3, wherein the valve (6, 18) provided to the pipe communicating with the outdoor side heat exchanger (4) is an on-off valve.

5. The air-conditioning apparatus of any one of claims 1 to 3, wherein the valve (6, 18) provided to the pipe communicating with the outdoor side heat exchanger (4) is a flow control valve.

6. The air-conditioning apparatus of any one of claims 1 to 5, wherein the flow rate adjustable three-way valve (7) and each of valves (6, 10, 18) are unitized.

7. The air-conditioning apparatus of any one of claims 1 to 5, wherein the flow rate adjustable three-way valve (7), each of valves (6, 10, 18), and the subcooling heat exchanger (9) are unitized.

8. The air-conditioning apparatus of any one of claims 1 to 7, wherein at least one of the flow rate adjustable three-way valve (7) and each of valves (6, 10, 18) is a cartridge type.

## Patentansprüche

1. Klimaanlage, umfassend:
einen Verdichter (1);
einen Außenwärmetauscher (4);
einen Unterkühlungswärmetauscher (9) (subcooling-Wärmetauscher);
eine Expansionseinrichtung;
einen Innenwärmetauscher (51); und
einen Akkumulator (11), der sequentiell durch Rohre verbunden ist,
wobei die Expansionseinrichtung ein strömungsratenanpassbares Dreiwegeventil (7) aufweist,
wobei das strömungsratenanpassbare Dreiwegeventil (7) aufweist:
eine Öffnung, die mit einem Rohr verbunden ist, das mit dem Außenwärmetauscher (4) kommuniziert,
eine Öffnung, die mit einem Rohr verbunden ist, das mit dem Innenwärmetauscher (51) kommuniziert, und
eine Öffnung, die mit einem Rohr verbunden ist, das mit einer Stromaufseite des Akkumulators (11) über den Unterkühlungswärmetauscher (9) kommuniziert,
wobei der Unterkühlungswärmetauscher (9) zwischen dem Außenwärmetauscher (4) und dem strömungsratenanpassbaren Dreiwegeventil (7) angeordnet und eingerichtet ist, Wärme zwischen Kältemittel, das das mit dem Außenwärmetauscher (4) kommunizierende Rohr durchströmt, und Kältemittel, das das mit der Stromaufseite des Akkumulators (11) kommunizierende Rohr durchströmt, auszutauschen, und wobei Ventile (6, 10, 18) jeweils am mit dem Außenwärmetauscher (4) kommunizierenden Rohr an einer Position zwischen dem strömungsratenanpassbaren Dreiwegeventil (7) und dem Unterkühlungswärmetauscher (9) und am mit der Stromaufseite des Akkumulators (11) kommunizierenden Rohr an einer Position zwischen dem strömungsratenanpassbaren Dreiwegeventil (7) und dem Unterkühlungswärmetauscher (9) bereitgestellt sind.

2. Klimaanlage nach Anspruch 1,
wobei das mit dem Außenwärmetauscher (4) kommunizierende Rohr in eine Vielzahl von Verzweigungsrohren an einer Position zwischen dem strömungsratenanpassbaren Dreiwegeventil (7) und dem Unterkühlungswärmetauscher (9) verzweigt, um mit dem Außenwärmetauscher (4) zu kommunizieren, und
wobei das Ventil (6, 18), das am mit dem Außenwärmetauscher (4) kommunizierenden Rohr bereitgestellt ist, an zumindest einem von der Vielzahl von Verzweigungsrohren bereitgestellt ist.

3. Klimaanlage nach Anspruch 1 oder 2,
wobei das strömungsratenanpassbare Dreiwegeventil (7) einen Hauptventilkörper (74), der an einem Strömungskanal zwischen der Öffnung, die mit dem mit dem Außenwärmetauscher (4) kommunizierenden Rohr verbunden ist, und der Öffnung, die mit dem mit dem Innenwärmetauscher (51) kommunizierenden Rohr verbunden ist, bereitgestellt ist, und einen Hilfsventilkörper (77) aufweist, der an einem anderen Strömungskanal zwischen dem einen Strömungskanal und der Öffnung, die mit dem mit der Stromaufseite des Akkumulators (11) kommunizierenden Rohr verbunden ist, bereitgestellt ist, und
wobei ein Öffnungsgrad des Hauptventilkörpers (74) angepasst wird, wenn der Hilfsventilkörper (77) vollständig offen ist, und ein Öffnungsgrad des Hilfsventilkörpers (77) angepasst wird, wenn der Hauptventilkörper (74) vollständig offen ist, und das Ventil (10), das am mit der Stromaufseite des Akkumulators (11) kommunizierenden Rohr bereitgestellt ist, veranlasst wird, geschlossen zu sein, wenn der Öffnungsgrad des Hauptventilkörpers (74) angepasst wird, und veranlasst wird, offen zu sein, wenn der Öffnungsgrad des Hilfsventilkörpers (77) angepasst wird.

4. Klimaanlage nach einem der Ansprüche 1 bis 3, wobei das Ventil (6, 18), das am mit dem Außenwärmetauscher (4) kommunizierenden Rohr bereitgestellt ist, ein Ein/Aus-Ventil ist.

5. Klimaanlage nach einem der Ansprüche 1 bis 3, wobei das Ventil (6, 18), das am mit dem Außenwärmetauscher (4) kommunizierenden Rohr bereitgestellt ist, ein Strömungssteuerventil ist.

6. Klimaanlage nach einem der Ansprüche 1 bis 5, wobei das strömungsratenanpassbare Dreiwegeventil (7) und jedes der Ventile (6, 10, 18) modularisiert sind.

7. Klimaanlage nach einem der Ansprüche 1 bis 5, wobei das strömungsratenanpassbare Dreiwegeventil (7), jedes der Ventile (6, 10, 18) und der Nebenkühlungswärmetauscher (9) modularisiert sind.

8. Klimaanlage nach einem der Ansprüche 1 bis 7, wobei zumindest eines des strömungsratenanpassbaren Dreiwegeventils (7) und jedes der Ventile (6, 10, 18) von einem Patronentyp (cartridge type) sind.

## Revendications

1. Appareil de climatisation comprenant :
un compresseur (1) ;
un échangeur de chaleur du côté extérieur (4) ;
un échangeur de chaleur de sous-refroidissement (9) ;
un dispositif d'expansion ;
un échangeur de chaleur du côté intérieur (51) ; et
un accumulateur (11), connectés de manière séquentielle par des canalisations ;
le dispositif d'expansion comprenant une soupape à trois voies à débit réglable (7), la soupape à trois voies à débit réglable (7) comprenant :
une ouverture connectée à une canalisation qui communique avec l'échangeur de chaleur du côté extérieur (4) ;
une ouverture connectée à une canalisation qui communique avec l'échangeur de chaleur du côté intérieur (51) ; et
une ouverture connectée à une canalisation qui communique avec un côté amont de l'accumulateur (11) à travers l'échangeur de chaleur de sous-refroidissement (9) ;
dans lequel l'échangeur de chaleur de sous-refroidissement (9) est agencé entre l'échangeur de chaleur du côté extérieur (4) et la soupape à trois voies à débit réglable (7), et est configuré de façon à échanger la chaleur entre un fluide frigorigène qui circule à travers la canalisation qui communique avec l'échangeur de chaleur du côté extérieur (4), et un fluide frigorigène qui circule à travers la canalisation qui communique avec le côté amont de l'accumulateur (11) ; et
dans lequel des soupapes (6, 10, 18) sont prévues de manière respective dans la canalisation qui communique avec l'échangeur de chaleur du côté extérieur (4) au niveau d'une position qui se situe entre la soupape à trois voies à débit réglable (7) et l'échangeur de chaleur de sous-refroidissement (9), et dans la canalisation qui communique avec le côté amont de l'accumulateur (11) au niveau d'une position qui se situe entre la soupape à trois voies à débit réglable (7) et l'échangeur de chaleur de sous-refroidissement (9).

2. Appareil de climatisation selon la revendication 1,
dans lequel la canalisation qui communique avec l'échangeur de chaleur du côté extérieur (4) se ramifie en une pluralité de canalisations de ramification au niveau d'une position qui se situe entre la soupape à trois voies à débit réglable (7) et l'échangeur de chaleur de sous-refroidissement (9) de façon à communiquer avec l'échangeur de chaleur du côté extérieur (4) ; et
dans lequel la soupape (6, 18) prévue dans la canalisation qui communique avec l'échangeur de chaleur du côté extérieur (4), est prévue dans l'une au moins de la pluralité de canalisations de ramification.

3. Appareil de climatisation selon la revendication 1 ou la revendication 2,
dans lequel la soupape à trois voies à débit réglable (7) comprend un corps de soupape principal (74) disposé dans un canal d'écoulement entre l'ouverture connectée à la canalisation qui communique avec l'échangeur de chaleur du côté extérieur (4), et l'ouverture connectée à la canalisation qui communique avec l'échangeur de chaleur du côté intérieur (51), et un corps de soupape auxiliaire (77) disposé dans un autre canal d'écoulement entre le canal d'écoulement et l'ouverture connectée à la canalisation qui communique avec le côté amont de l'accumulateur (11) ; et
dans lequel le degré d'ouverture du corps de soupape principal (74) est réglé lorsque le corps de soupape auxiliaire (77) est entièrement ouvert, et le degré d'ouverture du corps de soupape auxiliaire (77) est réglé lorsque le corps de soupape principal (74) est entièrement ouvert, et la soupape (10) disposée dans la canalisation qui communique avec le côté amont de l'accumulateur (11) est contrainte de se fermer lorsque le degré d'ouverture du corps de soupape principal (74) est réglé, et est contrainte de s'ouvrir lorsque le degré d'ouverture du corps de soupape auxiliaire (77) est réglé.

4. Appareil de climatisation selon l'une quelconque des revendications 1 à 3, dans lequel la soupape (6, 18) disposée dans la canalisation qui communique avec l'échangeur de chaleur du côté extérieur (4), est une soupape marche - arrêt.

5. Appareil de climatisation selon l'une quelconque des revendications 1 à 3, dans lequel la soupape (6, 18) disposée dans la canalisation qui communique avec l'échangeur de chaleur du côté extérieur (4), est une soupape de réglage du débit.

6. Appareil de climatisation selon l'une quelconque des revendications 1 à 5, dans lequel la soupape à trois voies à débit réglable (7) et chacune des soupapes (6, 10, 18), sont unitaires.

7. Appareil de climatisation selon l'une quelconque des revendications 1 à 5, dans lequel la soupape à trois voies à débit réglable (7), chacune des soupapes (6, 10, 18), et l'échangeur de chaleur de sous-refroidissement (9), sont unitaires.

8. Appareil de climatisation selon l'une quelconque des revendications 1 à 7, dans lequel l'une au moins de la soupape à trois voies à débit réglable (7) et de chacune des soupapes (6, 10, 18), est du type à cartouche.
